(19)

**Europäisches Patentamt**
**European Patent Office**
**Office européen des brevets**

(11) **EP 2 649 145 B1**

(12) **EUROPEAN PATENT SPECIFICATION**

(45) Date of publication and mention
of the grant of the patent:
**26.11.2014 Bulletin 2014/48**

(51) Int Cl.:
*C09J 189/00* (2006.01)     *C09J 123/00* (2006.01)
*C08L 97/02* (2006.01)     *B27N 3/00* (2006.01)

(21) Application number: **11796661.4**

(86) International application number:
**PCT/EP2011/071999**

(22) Date of filing: **07.12.2011**

(87) International publication number:
**WO 2012/076566 (14.06.2012 Gazette 2012/24)**

(54) **AQUEOUS ADHESIVE COMPOSITION COMPRISING A SYNTHETIC POLYMER AND LUPIN PROTEIN**

WÄSSRIGER KLEBSTOFF AUS EINEM SYNTHETISCHEN POLYMER UND LUPINPROTEIN

COMPOSITION ADHÉSIVE AQUEUSE CONTENANT UN POLYMÈRE SYNTHÉTIQUE ET PROTEINE DE LUPIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2010 EP 10194537**
**10.12.2010 US 421670 P**

(43) Date of publication of application:
**16.10.2013 Bulletin 2013/42**

(73) Proprietor: **Akzo Nobel Coatings International B.V.**
**6824 BM Arnhem (NL)**

(72) Inventor: **KHABBAZ, Farideh**
**S-131 42 Nacka (SE)**

(74) Representative: **Akzo Nobel IP Department**
**Velperweg 76**
**6824 BM Arnhem (NL)**

(56) References cited:
**EP-A1- 2 100 922     WO-A1-2007/139501**
**DE-C- 377 838**

- **Vergara et al: "Use of lupin as bio-based product", , 8 October 2010 (2010-10-08), XP002624054, Retrieved from the Internet: URL: http://conference.fh-salzburg.ac.at/fi leadmin/ files/documents/presentations/Post er_ 11_Vergara.pdf [retrieved on 2011-02-21]**
- **Vidal et al: "Evaluation of lupin flour (LF)-based adhesive for making sustainable wood materials.", , 15 October 2010 (2010-10-15), XP002624055, Retrieved from the Internet: URL: http://www.swst.org/meetings/AM10/ppts /Vidal.pdf [retrieved on 2011-02-21]**
- **Vidal et al: "Evaluation of lupin flour (LF)-based adhesive for making sustainable wood materials.", , 14 October 2010 (2010-10-14), XP002624056, Retrieved from the Internet: URL: http://www.swst.org/meetings/AM10/pdfs /IW-6%20vidal%20paper.pdf [retrieved on 2011-02-21]**

**Description**

The invention relates to an adhesive composition, an adhesive system, their preparation and use.

It has been disclosed to use naturally occurring substances like starch and plant proteins, particularly soy protein, as components in wood adhesives. However, it has been found difficult to combine good rheological properties of the adhesive with high bonding strength, particularly at wet conditions.

WO 2007/ 139501 discloses an adhesive system comprising a protein and one or more polymers containing primary, secondary or tertiary amino groups, or pendant amide groups.

WO 2007/139503 discloses an adhesive system comprising a protein and one or more polymers containing acetoacetoxy groups.

WO 2010/003054 discloses adhesive formulations comprising protein and starch.

US 2006/0128840 discloses an adhesive composition comprising legume starch and a synthetic resin. The starch is extracted from leguminous plants and the protein content is less than 1%.

WO 2008/024444 discloses adhesive compositions containing polyamidoamine epihalohydrin resins of low molecular weight and a soy protein or lignin.

WO 2011/009812 discloses an adhesive system comprising a protein, a polymer comprising at least one carboxylic group or at least one carboxylic anhydride group, and a polyamine-epihalohydrin.

EP 2100922 discloses an aqueous slurry comprising defatted soy four, water and a water soluble polymer having a molecular weight in the range from 1000 to 20000.

Vidal et al "Evaluation of lupin flour (LF)-based adhesive for making sustainable wood materials" http://www.swst.org/meetings/AM10/ppts/Vidal.pdf, Vidal et al "Evaluation of lupin flour (LF)-based adhesive for making sustainable wood materials" http://www.swst.org/meetings/AM10/pdfs/IW-6%20vidal%20paper.pdf and Vergara et al "Use of lupin as bio-based product" http://conference.fh-salzburg.ac.at/fileadmin/files/documents/presentations/Poster_11_Vergara.pdf, all disclose an adhesive based on lupin flour denatured with urea.

DE 377838 discloses an adhesive made from potato flour, soy flour or lupin flour together with paper grindings and sodium alcoholate.

It has now been found that lupin protein can be used together with synthetic polymers in aqueous adhesive compositions that give high bonding strength and have favourable rheological properties even at high protein contents. It has also been found not to be necessary for the protein to be denatured with urea before use as an adhesive.

One aspect of the present invention concerns an aqueous adhesive composition comprising at least one synthetic polymer and from 1 to 99 wt% on a dry/dry basis of lupin protein, said at least one synthetic polymer being at least one of homo- or copolymers of vinylacetate, homo or co-polymers of esters of (meth)acrylic acid, homo- or co-polymers of (meth)acrylic acid, homo-or co-polymers of (meth)acrylamide, homo- or co-polymers of vinyl alcohol, polyurethane, or styrene-butadiene co-polymers. More specifically, the amount of lupin protein in the composition may, for example, be from 1 to 90 or from 5 to 80 wt% on a dry/dry basis. In some embodiments the amount of lupin protein in the composition is from 10 to 70 wt% or from 20 to 60 wt% on a dry/dry basis. The amount of synthetic polymer in the composition may, for example, be from 1 to 99 or from 10 to 90 wt% on a dry/dry basis. In some embodiments the amount of synthetic polymer in the composition is from 15 to 80 wt% or from 15 to 70 wt% on a dry/dry basis. The dry content of the composition may, for example, be from 5 to 80 wt% or from 10 to 65 wt%. In some embodiments the dry content of the composition is from 10 to 80 wt%, particularly from 20 to 70 wt% or from 30 to 65 wt%.

Another aspect of the invention concerns a method for the preparation of the aqueous adhesive composition of the invention comprising mixing lupin protein with a synthetic polymer in an aqueous phase so to obtain an aqueous composition having the desired content of lupin protein.

Still another aspect of the invention concerns an adhesive system comprising an aqueous adhesive composition as described herein. Such an adhesive system may consist of an adhesive composition as described herein or further comprise at least one hardener as a separate component intended to be used in combination with the adhesive composition.

A further aspect of the invention concerns a method of producing a wood based product, comprising applying an adhesive composition or an adhesive system of the invention onto at least one surface of one or more pieces of a wooden material, and joining the one or more pieces with one or more further pieces of a material.

Still a further aspect of the invention concerns a wood based product obtainable by the method of the invention.

Still a further aspect of the invention concerns use of an adhesive composition or an adhesive system of the invention for joining one or more pieces of a wooden material with one or more further pieces of a material.

The term "adhesive system" as used herein refers to a combination of components which function as and is intended to be used together as an adhesive. The components may be present in the same adhesive composition comprising all the components necessary for its function as an adhesive or in separate compositions, such as an adhesive composition and a hardener, functioning as an adhesive when combined. Such separate compositions may be mixed shortly before application to the surfaces to be joined or applied separately to the surfaces. The adhesive system of the invention is particularly useful for joining pieces of wooden materials.

The term lupin protein as used herein refers to protein from beans of plants of the genus Lupinus in the legume family Fabaceae. Such protein is commercially available, for example as lupin flour (usually about 40 wt% of protein) or lupin protein concentrate (usually from about 45 to about 60 wt% protein). Any of these products can be used directly in the composition of the invention, meaning that said composition may comprise any further substance included in said lupin product, such as various carbohydrates and fats originating from the lupin bean. It is also possible to use lupin protein isolates of higher concentration, for example up to 80 wt% or up to 90 wt% lupin protein, or substantially pure lupin protein. The lupin protein may or may not be chemically modified. Synthetic polymers useful in the composition include homo- or co-polymers of vinylacetate, homo or co-polymers of esters of (meth)acrylic acid, homo-or co-polymers of (meth)acrylamide, homo- or co-polymers of (meth)acrylic acid or homo- or co-polymers of vinyl alcohol. Further examples include polyurethane and styrene-butadiene co-polymers. More specific examples of synthetic polymers include polyvinyl acetate (PVAc), polyethylene vinylacetate (EVA), co-polymers of vinylchloride and vinylacetate or ethylene vinylacetate, polyethylene-acrylic acid (PEAA), ethylene methyl acrylate copolymer (EMA), polyethyl methacrylate (PEMA), co-polymers of vinylacetate and other esters, such as alkyl esters of (meth)acrylic acid, polyvinyl alcohol (PVA), styrene acrylate co-polymers, and styrene-butadiene rubber (SBR). Many synthetic polymers useful for the invention are commercially available as aqueous dispersions or solutions that can be mixed with lupin protein or a product comprising lupin protein to obtain a composition of the invention. The synthetic polymers can also be prepared by general methods known to those skilled in the art.

The term (meth)acryl as used herein refers to both acryl and methacryl equally. For example, (meth)acrylate refers to any of acrylate or methacrylate while (meth)acrylic acid refers to any of acrylic acid or methacrylic acid.

The term dry content as used herein refers to the content of anything in the composition not being water.

The term wooden material as used herein refers not only to solid wood, but also to materials such as fibre-, chip-, and particleboard materials. The surfaces to be joined may be of the same or different type of materials. The pieces of wooden material can be any type and form such as chips, fibres, sheets, laminas, veneers, board products etc.

In some embodiments the synthetic polymer comprises carboxylic groups or carboxylic anhydride groups. The amount thereof may, for example, be from 0.01 to 15 mole% or from 0.05 to 10 mole% of carboxylic groups based on the combined numbers of moles of monomer comprised in the polymer, or from 0.005 to 7.5 mole% or from 0.025 to 5 mole% of carboxylic anhydride groups based on the combined numbers of moles of monomer comprised in the polymer.

The carboxylic groups or carboxylic anhydride groups may originate from co-monomers comprising such groups used in the preparation of the synthetic polymer, by carboxylation of the polymer, or a combination thereof.

The carboxylic or carboxylic anhydride groups may, for instance, originate from straight or branched $C_{3-12}$ monocarboxylic acid monomers, straight or branched $C_{4-12}$ dicarboxylic acid monomers; or straight, branched, or cyclic $C_{4-12}$ carboxylic anhydride monomers, wherein the carbon chain of said monomers contains at least one terminal, pendant, or internal ethylenic unsaturation. Such monomers may include one or more of acrylic acid, methacrylic acid, crotonic acid, isocrotonic acid, itaconic acid, itaconic anhydride, maleic acid, maleic anhydride, and fumaric acid, particularly acrylic acid, methacrylic acid or a combination thereof.

In some embodiments the synthetic polymer is obtainable from monomers comprising vinyl ester monomers and (meth)acrylate monomers. In an aspect of said embodiments the monomers for the polymer comprise at least 45 mole-% or from 55 to 99 mole-% of vinyl ester monomers. Said vinyl ester monomers may, for example, be vinyl acetate monomers. Said (meth)acrylate monomers may, for instance, include alkyl(meth)acrylates, hydroxyalkyl(meth)acrylates, alkyl di(meth)acrylates, epoxy(meth)acrylates, and combinations thereof. More specifically, said (meth)acrylate monomers may include ethyl acrylate, methyl acrylate, n-butyl acrylate, iso-butyl acrylate, t-butyl acrylate, methyl methacrylate, 2-ethylhexyl acrylate, cyclohexyl acrylate, cyclopentanyl methacrylate, 2-hydroxyethyl (meth)acrylate, 2-hydroxypropyl acrylate, tetrahydrofurfuryl acrylate, and combinations thereof. Even more specifically said (meth)acrylate monomers may, for instance, be at least one of n-butyl acrylate or methyl methacrylate, or a combination thereof, particularly methyl methacrylate. In an aspect of said embodiments the synthetic polymer may further comprise carboxylic or carboxylic anhydride groups as described above.

In some embodiments the synthetic polymer is at least one of polyvinyl alcohol, polyvinyl acetate, polyvinyl acetate comprising carboxylic groups, ethylene vinyl acetate polymer, styrene butadiene polymer and styrene acrylate polymer.

In some embodiments the synthetic polymer is a co-polymer from monomers comprising vinyl ester monomers, (meth)acrylate monomers and carboxylic acid or carboxylic anhydride group containing monomers. In an aspect of said embodiments, the polymer may be either free from any other kind of monomers or comprising less than 1 mole% of any such other kinds of monomers.

In some embodiments the adhesive composition comprises polyvinyl alcohol, either as the sole synthetic polymer or in combination with at least one other synthetic polymer. In the latter case it may partly or fully originate from a protective colloid used at the preparation of another synthetic polymer, for example a homo- or co-polymer of vinylacetate. The polyvinyl alcohol may, for example, have a degree of hydrolysis of at least 25% or at least 50% or even at least 75%, for example at least 85%. The polyvinyl alcohol may optionally comprise certain functional groups, for example carboxylic acid or carboxylic anhydride groups. If polyvinyl alcohol is included in the composition it is usually partly or entirely dissolved in the aqueous phase.

In some embodiments the synthetic polymer may be a co-polymer in which monomers for internal cross-linking have been used, for examples in amounts up to 1 mole% or up 0.5 mole% based on the combined numbers of moles of monomer comprised in the polymer. Examples of such monomers include ethylene glycol di(meth)acrylate, di(ethylene glycol) dimethacrylate, butylene glycol dimethacrylate, 1,4-butanediol diacrylate, pentaerythritol triacrylate, trimethylolpropane tri(meth)acrylate, trimethylolpropane diallylether, allyl (meth)acrylate, diallyl maleate, triallyl (iso)cyanurate, and combinations thereof.

In some embodiments the synthetic polymer comprises post-cross-linking groups such as at least one of N-alkylol, N-alkoxymethyl or glycidyl groups. Such groups may, for example be incorporated into the polymer by copolymerising at least one monomer comprising at least one such group with the other monomers. Examples of such groups include N-alkylol (meth)acrylamides such as N-methylol (meth)acrylamide and N-(alkoxymethyl) (meth)acrylates such as N-(butoxymethyl) (meth)acrylamide or N-(iso-butoxymethyl) (meth)acrylamide.

The synthetic polymer may be present in the form of dispersed particles, for example with an average particle size from 0.05 to 10 $\mu$m or from 0.1 to 5 $\mu$m, or be partially or fully dissolved in the aqueous phase.

The weight average molecular weight $M_w$ of the synthetic polymer may, for example, be from 5000 to 2000000 or from 100000 to 1000000.

An adhesive system of the invention may further comprise at least one cross-linking substance, examples of which include polyamine-epihalohydrin such as polyaminoamide epichlorohydrin, isocyanates such as isophorone diisocyanate (IPDI), toluene diosocyanate (TDI), polymethylene polyphenyl isocyanate (PDMI) or methylene diphenyl diisocyanate (MDI), glyoxal, oxazoline functionial co-polymers such as oxazoline functional styrene acrylate co-polymers, polymers or other compounds comprising acetoacetoxy groups such as trimethylol propane acetoacetate (AATMP), acetoacetylated polyvinyl alcohol (AAPVA) or polymers of acetoacetoxy ethyl(meth)acrylate (AAEM), polymers comprising primary, secondary or tertiary amino groups or pendant amide groups such as polyvinyl amine, poly(vinylalcohol-co-vinyl amine), poly(vinylalcohol-co-vinylformamide), polyallylamine, polyethylene imine or polyvinyl formamide, and aluminium salts like aluminium chloride, aluminium sulfate or aluminium nitrate. Such substances can participate in or catalyse cross-linking reactions or complex bonding of functional groups in the lupin protein and/or the synthetic polymer at hardening of the adhesive and contribute to create a strong bond. The amount of said at least one cross-linking substance depends of which substance used and may, for example, be from 0.1 to 25 wt% or from 1 to 20 wt% of the total amount of lupin protein and synthetic polymer. In some embodiments said at least one cross-linking substance may be included in an adhesive composition comprising the lupin protein and the at least one synthetic polymer. In some embodiments said at least one cross-linking substance is included at least in a hardener intended to be used in combination with the adhesive composition. In some embodiments at least one cross-linking substance is included both in an adhesive composition comprising the lupin protein and the at least one synthetic polymer and in a hardener composition intended to be used in combination with the adhesive composition.

In some embodiments the at least one cross-linking substance is polyamine-epihalohydrin. The term "polyamine-epihalohydrin" as used herein refers to polyamine-epihalohydrin resins, including those that have been prepared with epihalohydrin, e.g. epichlorohydrin, as a reactant, either during the polymerisation or in the modification of an existing polymer. The polyamine may be a polyaminoamide. Such resins are widely used as wet strength agents in paper making and are commercially available, e.g. from Akzo Nobel under the trademarks Eka WS 320, Eka WS 320 RC, Eka WS 325, Eka WS XO, and Eka WS X14. Further, preparation thereof is disclosed in the literature, e.g. in any one of US 4450045, US 3311594, US 4336835, US 3891589, US 2926154, US4857586, US4975499, US5017642, US 5019606, US 5093470, US 5516885, US 5902862 and WO 010/000696. In the art, polyaminoamide may also be referred to as polyamidoamine, polyaminopolyamide, polyamidopolyamine, polyamidepolyamine, polyamide, basic polyamide, cationic polyamide, aminopolyamide, amidopolyamine or polyaminamide. The polyaminoamide epihalohydrin resin may be in an aqueous solution, that further may comprise a water-miscible solvent such as methanol, ethanol or dimethyl formamide. The molecular weight can vary within wide ranges and $M_w$ may, for example, be from 10000 to 1000000 or higher, such as from 50000 to 1000000. Epihalohydrins that can be used include epibromohydrin and epichlorohydrin, in particular epichlorohydrin. The polymers may be produced using, for instance, from 0.5 to 2 moles of epihalohydrin per mole of basic nitrogen in the polyaminoamide.

An adhesive system of the invention may further comprise additives such as surfactants, emulsifiers, protective colloids, preservatives, antifoaming agents, viscosity adjusting agents; fillers such as kaolin or calcium carbonate, and other additives known to be suitable for use in wood adhesive formulations, including combinations thereof. Such additives may be included in the adhesive composition and/or in a hardener intended to be used in combination with the adhesive composition. Furthermore, the composition of the invention may be substantially free from urea. Also an adhesive system of the invention may be substantially free from urea.

In a method of the invention an adhesive system, for example a single adhesive composition or two or more compositions of an adhesive system, such as one aqueous composition comprising lupin protein and at least one synthetic polymer and another composition comprising a cross-linking substance, is applied to at least one surface of one or more pieces of a wooden material, and joining the one or more pieces with one or more further pieces of a material. When two or more compositions are used they may be mixed before application or be applied separately to the at least one surface or to two different surfaces to be joined. After application of the adhesive system, the pieces to be joined are usually pressed together. The pressing time depends the wood based product intended to be produced and may, for example, be from 10 sec to 1200 minutes or from 10 to 400 minutes. Also the temperature of the press depends on the product to be produced and may, for example, be from 0 to 250 °C or from 50 to 200°C.

Some embodiments of a method of the invention comprise mixing wooden chips with the adhesive system, and joining the chips. As used herein the term "wood chips" includes chips, shavings, flakes, sawdust particles and any similar finely divided wood based material. The moisture content of the chips before mixing with said copolymer may, for example, be from 0 to 30 wt%, such as from 0 to 10 wt% or from 0 to 5 wt%. The moisture content of the mixture of chips and adhesive system at the beginning of the pressing may, for example, be from 3 to 25 wt% or from 5 to 20 wt%.

Some embodiments of a method of the invention comprise applying the adhesive system onto a sheet-like material, and joining it with a further sheet-like material. The term sheet-like material as used herein refers to materials having dimensions in either the length or width directions, or both, that are much greater than the dimension of the material in the thickness direction; exemplary of sheet-like materials include lamellae, boards, veneer, and the like.

Some embodiments of the invention comprise applying the adhesive system onto a wooden board material, such as board of solid wood, particle board, fibre board, chip board or oriented strand board, and joining the wooden material with another kind of material such as foils of paper or plastic materials.

A wood based product of the invention may, for instance, be a laminated or veneered material, such as laminated flooring, veneered flooring, a veneered furniture material, plywood, a wall panel, a roofing panel, a laminated beam, or a composite product such as a particle board, fibre board, chip board or oriented strand board.

The invention is further illustrated by means of the following non-limiting examples. Unless otherwise stated parts and percentages refer to parts by weight and percent by weight, respectively.

The following raw materials were used in the Examples:

Soy protein isolate Soy Pro 900™ From Gingdao Crown Imp & Exp. Crop. Ltd via Roquette, protein content 90 wt%

Lupin Protein concentrate FRALU-CON™ 805950 from Barentz, protein content 55 wt%

PVA 13.4 wt% aqueous solution Poval™ 117 from Kuraray

EVA 54-56 wt% aqueous dispersion Mowilith™ DM 104 from Celanese

Carboxylated PVAc dispersion Mowilith™ DN60 from Celanese

PVAc 50 wt% aqueous dispersion Mowilith™ DHSS3 91963 from Celanese

SBR 50 wt% aqueous dispersion Dow Latex 395 90649 from The Dow Chemical Company

Styrene-acrylate 49 wt% aqueous dispersion Mowilith DP CD 0180 from Celanese

Corn starch C* Gum NC 03432 from Cargill

White dextrin from Lyckeby Stärkelsen

Polyaminoamide epichlorohydrin, 20 wt% aqueous solution, Eka® WS 325 from AkzoNobel.

Example 1

The rheology was compared between aqueous compositions of polyvinyl alcohol together with either soy protein isolate (SPI) or lupin protein concentrate (LPC). A stock solution was first prepared with a Poval™ 117 polyvinyl alcohol solution (13.4 wt%) diluted with 20 wt% water. The protein product (SPI or LPC) was then added into the stock solution during continuous stirring using a dissolver mixer. The samples were mixed for 5 minutes after the last protein addition. The amount of added protein was adjusted to a Brookfield viscosity of about 4000 - 5000 cP (60 rpm, 10 sec, LV4 spider). Finally 0.30 wt% biocides were added to the solutions. Three samples were prepared according to the table below:

| Sample | Amount (wt%) | | |
|---|---|---|---|
| | SPI or LPC | Poval 117 solution (13.4%) | Water |
| SPI I | 4.7 | 76.3 | 19.0 |
| SPI II | 3.4 | 77.2 | 19.4 |
| LPC | 8.7 | 73.1 | 18.2 |

Rheological measurements were performed using a Physica MCR 100 equipped with a 50 mm plate-plate spider and a Peltier temperature control unit adjusted to 23°C. The sample gap was in-between 0.90 and 1.00 mm. Approximately 2-2.5 ml of the samples were added using plastic Pasteur pipette with the narrow part of the tip removed. The whole measure zone was kept protected from dehydration in a specially designed plastic cup containing a moisturized paper. The samples were tested using;

$$\text{Oscillating amplitude sweep } (\omega=1 \text{ s}^{-1})$$

$$\text{Oscillating frequency sweep } (\gamma=1\%, \omega=1.257-150 \text{ s}^{-1})$$

The Brookfield viscosities were also measured directly after the respective rheology measurement. The results are shown in the table below:

Results, viscosity and oscillating amplitude data:

| Sample | Viscosity After preparation (cP) | Amplitude sweep data | | |
|---|---|---|---|---|
| | | LVE G' (Pa)* | LVE Complex viscosity (mPa·s)* | Yield point: [G' downward dip] Shear stress $\tau$ |
| SPII | 7100 | 0.7 | 8400 | No clear yield point, but a slow decrease of G' in the whole range (0.05-20 Pa) |
| SPI II | 4900 | 0.5 | 5600 | No clear yield point, but a slow decrease of G' in the whole range (0.05-20 Pa) |
| LPC | 3900 | 1 | 6100 | ~1Pa |
| * Linear viscoelastic (LVE) range, i.e. the measure range where the data are constant and the structures in the sample still remain intact. | | | | |

It was found possible to add up to about 9 wt% of LPC before reaching the target viscosity of around 5 000 cP. The same figure for SPI was substantially lower, only 3 - 3.5 wt%. All samples were "liquid like" with G">G' in the whole measure range. No clear yield point was observed in the SPI samples, but a slow decrease of G' in the whole range (0.05-20 Pa). The storage module G' in the LVE-range was twice as high for the LPC (1 Pa) compared to the SPI II sample, which may be due to the much higher concentration of protein in the LPC sample. The structure related shear resistance had a shear stress yield point of about 1 Pa. The G' and the complex viscosity decreases to the same level as the SPI II sample above this yield point. The oscillating frequency sweep measurement showed no significant differences between the SPI II and the LPC sample.

Example 2

Similar to Example 1, the rheology of aqueous compositions of soy protein isolate (SPI) and lupin protein concentrate (LPC) together with various synthetic polymers were compared. Thus, stock solutions with 24 wt% of the aqueous polymer dispersions and 76 wt% of water were first prepared. The protein product was then added in fractions to each stock solution during continuous stirring using a dissolver mixer. The samples were mixed for 5 minutes after the last protein addition. The amount of added protein was adjusted to a Brookfield viscosity of about 15000 cP (3 rpm, LV4 spider). Finally 0.30 wt% biocides were added to the solutions. The samples prepared are shown in the table below:

| Synthetic polymer dispersion | Protein product | Amount | | |
|---|---|---|---|---|
| | | SPI or LPC (wt%) | Polymer dispersion (wt%) | Water (wt%) |
| EVA Mowilith™ DM 104 | SPI | 10.5 | 21.5 | 68.0 |
| | LPC | 30.0 | 16.8 | 53.2 |
| PVAc Mowilith™ DHSS3 | SPI | 9.5 | 21.7 | 68.7 |
| | LPC | 28.4 | 17.2 | 54.4 |
| SBR Dow™ Latex 395 | SPI | 8.8 | 21.9 | 69.3 |
| | LPC | 28.6 | 17.1 | 54.3 |

Rheological measurements were made as in Example 1 and the results are shown in the tables below:

Results viscosity and oscillating amplitude sweep yield points

| Polymer Dispersion | Protein product | Viscosity After preparation (cP) | Viscosity After rheology measurement (cP) | Yield point (G'=G") Amplitude sweep | |
|---|---|---|---|---|---|
| | | | | $\tau$(Pa) | G'(Pa) |
| EVA | SPI | 18000 | 22000 | 11.9 | 35.6 |
| | LPC | 14000 | 11000 | 2.9 | 4.0 |
| PVAc | SPI | 15000 | 15000 | 5.5 | 33.7 |
| | LPC | 12000 | 13000 | 2.9 | 3.7 |
| SBR | SPI | 14000 | 27000 | 6.2 (5.81; 6.49) | 43.9 (47.141; 40.578) |
| | LPC | 13000 | 17000 | 1.5 | 7.6 |

Results oscillating frequency sweep

| Dispersion | Protein product | Gel-Liquid Transition (G'=G") Frequency sweep | |
|---|---|---|---|
| | | $\omega$(s$^1$) | G' (Pa) |
| EVA | SPI | * | * |
| | LPC | * | * |
| PVAc | SPI | * | * |
| | LPC | 55 | 36.5 |
| SBR | SPI | * | * |
| | LPC | 27 | 31.6 |
| * Gel structure in the whole range (no G'/G" crossing). | | | |

Regardless of the kind of synthetic polymer dispersion used it was found possible to add up to 29 - 30 wt% of lupin protein concentrate before reaching the target viscosity of around 15 000 cP. The corresponding figure for soy protein isolate was substantially lower, only 9 - 10.5 %.

All samples were rheologically characterized (by oscillating measurements) as gel-like at lower frequencies (the oscillation measurement analogue to shear rate) and strain. The strength of the internal "gel forces" differed substantially between the soy and the lupin protein samples. The yield points for lupin based samples were 1.5 - 2.9 Pa while the yield points for the soy based samples were 5.5 - 11.9 Pa .i.e. it took much less force to break the gel in the Lupin protein sample. The internal gel modulus (G') in the soy protein samples were also 5 - 10 times larger than in the lupin samples. The frequency sweep measurement showed the same feature with a gel-liquid transition above a certain frequency for lupin with PVAc and SBR and close to one for EVA while all soy samples were well into the gel-state in the whole range for all dispersions. The samples with SPI and EVA or SBR thickened 1-2 days after the preparation according to the viscosity measurement while the LPI and EVA sample seemed to get slightly thinner. The other samples maintained roughly the same viscosity.

Example 3

An adhesive composition was prepared by mixing 82 g Milli-Q water with 0.90 g biocides and 36 g carboxylated PVAc dispersion Mowilith™ DN60 with stirring for 30 min. Then 45 g of lupin protein concentrate (LPC) was gradually added to the mix. When all the protein had been added the stirring was continued for 30 min. The resulting pH was 5.5.

A further formulation was prepared in the same way with the exception that 5 wt% (based on the protein amount) of chalk was added at the end. The resulting pH was 6-6.5.

Still a further formulation was prepared in the same way but with the exception that styrene acrylate dispersion Mowilith DP CD 0180 was used as synthetic polymer instead of Mowilith™ DN60 and that the amount of lupin protein-concentrate was 55 g. The resulting pH was 5.5.

For comparative purposes, adhesive formulations were prepared in the same way by mixing 82 g Milli-Q water with 0.90 g biocides and 21 g corn starch or white dextrin during stirring for 30 min. Then 40 g of lupin protein concentrate was gradually added to the mix. When all the protein had been added the stirring was continued for 30 min. The resulting pH of both samples was 5.5.

The adhesive formulations were tested according to EN 204/205 by gluing material of beech (13.5 cm x 80 cm) using 180 g/m$^2$ of adhesive. Just prior to gluing 20 parts polyaminoamide epichlorohydrin Eka WS 325 was added as a hardener to 100 parts of each adhesive composition. The materials were pressed at a pressure of 0.7 MPa, a press temperature of 110°C and a press time of 10 min. After pressing the sample pieces were conditioned in a climate room (23±2°C, 50±5% RH) for one week before sawing and evaluation. The tensile shear strength for each sample was measured according to D1, D2 (re-dried), D3 (wet) and WATT 91 and the results are shown in the table below:

Results EN 204/205

| Sample | Measured solid content (%) | Viscosity (mPas), Brookfield LV 4, 12 rpm | D1 (MPa) | D2 (re-dried) (MPa) | D3 (wet) (MPa) | WATT 91 (MPa) |
|---|---|---|---|---|---|---|
| LPC + starch | 39 | 4000 | 11.740 | 0 | 0 | 5.450 |
| LPC + dextrin | 40 | 26000 | 13.370 | 1.210 | 0.540 | 5.990 |
| LPC + DN60 | 38 | 12000 | 11.730 | 12.070 | 2.708 | 7.222 |
| LPC + DN60 + chalk | 42 | No measured | 11.840 | 11.860 | 3.517 | 9.451 |
| LPC + DP CD 0180 | 39 | 17000 | 10.750 | Not measured | 1.900 | 3.557 |

The carboxylated PVAc Mowilith DN60 was found to work better in combination with the lupin protein concentrate than the styrene acrylate Mowilith DP CD 0180. Lupin protein concentrate dispersed in DN60 passed the demands for D3 and WATT 91. Addition of approximately 5% (based on the protein amount) chalk to the adhesive improved both the water resistance (D3 wet value) and the heat resistance (WATT 91 value) for the lupin protein adhesive. The lupin protein concentrate dispersed in styrene-acrylate dispersion Mowilith DP CD 0180 did not pass the WATT 91 but almost passed the D3 test.

None of the samples with lupin protein concentrate dispersed in starch or dextrin passed the demands for D2 (redried) or WATT 91. All of specimens of lupin protein concentrate dispersed in starch fell apart when water soaked for 3 hours (D2, redried) or 4 days (D3, wet). Only 3 specimens of lupin protein concentrate dispersed in white dextrin held together and could be evaluated after water soaking for 4 days (D3, wet). Lupin protein concentrate dispersed in the carboxylated PVAc dispersion DN60 was the only sample that passed the demands for D2, D3 and WATT 91.

**Claims**

1. An aqueous adhesive composition comprising at least one synthetic polymer and from 1 to 99 wt% on a dry/dry basis of lupin protein, said at least one synthetic polymer being at least one of homo- or co-polymers of vinylacetate, homo or copolymers of esters of (meth)acrylic acid, homo- or co-polymers of (meth)acrylic acid, homo- or co-polymers of (meth)acrylamide, homo- or co-polymers of vinyl alcohol, polyurethane, or styrene-butadiene co-polymers.

2. Composition as claimed in claim 1, wherein said at least one synthetic polymer is at least one of polyvinyl acetate (PVAc), polyethylene vinylacetate (EVA), co-polymers of vinylchloride and vinylacetate or ethylene vinylacetate, polyethylene-acrylic acid (PEAA), ethylene methyl acrylate copolymer (EMA), polyethyl methacrylate (PEMA), co-polymers of vinylacetate and other esters, polyvinyl alcohol (PVA), styrene acrylate co-polymers, and styrene-butadiene rubber (SBR).

3. Composition as claimed in any one of the claims 1-2, wherein the synthetic polymer comprises carboxylic groups or carboxylic anhydride groups.

4. Composition as claimed in claim 3, wherein the synthetic polymer is a co-polymer from monomers comprising vinyl ester monomers, (meth)acrylate monomers and carboxylic acid or carboxylic anhydride group containing monomers.

5. Composition as claimed in any one of the claims 1-4 wherein the dry content is from 5 to 90 wt%.

6. Composition as claimed in any one of the claims 1-5, wherein the amount of synthetic polymer in the composition is 10 to 90 wt% on a dry/dry basis.

7. A method for the preparation of a composition according to any one of the claims 1-6, comprising mixing lupin protein with a synthetic polymer in an aqueous phase so to obtain an aqueous composition having a content of lupin protein from 1 to 99 wt% on a dry/dry basis.

8. An adhesive system consisting of an aqueous composition according to any one of the claims 1-6.

9. An adhesive system comprising an aqueous composition according to any one of the claims 1-6 and at least one hardener as a separate component intended to be used in combination with the adhesive composition.

10. An adhesive system as claimed in any one of the claims 8-9, further comprising at least one cross-linking substance.

11. An adhesive system as claimed in claims 9 and 10, wherein said at least one cross-linking substance is included at least in the hardener.

12. An adhesive system according to any one of the claims 10-11, wherein said at least one cross-linking substance is at least one of polyamine-epihalohydrin, isocyanates, glyoxal, oxazoline functionial co-polymers, polymers or other compounds comprising acetoacetoxy groups, polymers comprising primary, secondary or tertiary amino groups or pendant amide groups and aluminium salts.

13. A method of producing a wood based product, comprising applying an adhesive composition according to any one of the claims 1-7 or an adhesive system according to any one of the claims 8-12 onto at least one surface of one or more pieces of a wooden material, and joining the one or more pieces with one or more further pieces of a material.

14. Wood based product obtainable by the method according to claim 13.

15. Use of an adhesive composition according to any one of the claims 1-7 or an adhesive system according to any one of the claims 8-12 for joining one or more pieces of a wooden material with one or more further pieces of a material.

**Patentansprüche**

1. Wässrige Klebstoffzusammensetzung umfassend mindestens einem synthetischen Polymer und Lupinprotein von 1 bis 99 Gew.-% in der Trockenmasse (dry/dry basis), wobei das mindestens eine synthetische Polymer mindestens eines der folgenden ist: Vinylacetat-Homo- oder Copolymere, Homo- oder Copolymere von Estern der (Meth)acrylsäure, Homo- oder Copolymere der (Meth)acrylsäure, Homo- oder Copolymere von (Meth)acrylamid, Vinylalkohol-Homo- oder Copolymere, Polyurethane, oder Styrolbutadien-Copolymere.

2. Zusammensetzung nach Anspruch 1, wobei das mindestens eine synthetische Polymer mindestens eines der folgenden ist: Polyvinylacetat (PVAc), Polyethylenvinylacetat (EVA), Copolymere von Vinylchlorid und Vinylacetat oder Ethylenvinylacetat, Polyethylen-Acrylsäure (PEAA), ein Ethylenmethylacrylat-Copolymer (EMA), Polyethylmethacrylat (PEMA), Copolymere von Vinylacetat anderen Estern, Polyvinylalkohol (PVA), Styrol-Acrylat-Copolymere und Styrol-Butadien-Kautschuk (SBR).

3. Zusammensetzung nach einem der Ansprüche 1-2, wobei das synthetische Polymer Carboxylgruppen oder Carboxyl-Anhydrid-Gruppen aufweist.

4. Zusammensetzung nach Anspruch 3, wobei das synthetische Polymer ein Copolymer aus Monomeren umfassend Vinylestermonomere, (Meth)acrylatmonomere und Carbonsäure oder einer Carboxyl-Anhydrid-Gruppen enthaltende Monomereist.

5. Zusammensetzung nach einem der Ansprüche 1-4, wobei der Trockengehalt von 5 bis 90 Gew.-% beträgt.

6. Zusammensetzung nach einem der Ansprüche 1-5, wobei die Menge an synthetischem Polymer in der Zusammensetzung 10 bis 90 Gew.-% in der Trockenmasse (dry/dry basis) beträgt.

7. Verfahren zur Herstellung einer Zusammensetzung nach einem der Ansprüche 1-6, das folgendes aufweist: Mischen von Lupinprotein mit einem synthetischen Polymer in einer wässrigen Phase, um eine wässrige Zusammensetzung mit einem Lupinproteingehalt von 1 bis 99 Gew.-% in der Trockenmasse (dry/dry basis) zu erhalten.

8. Klebesystem aufweisend eine wässrige Zusammensetzung nach einem der Ansprüche 1-6.

9. Klebesystem umfassend einer wässrigen Zusammensetzung nach einem der Ansprüche 1-6 und mindestens einem Härtemittel als separate Komponente, das in Kombination mit dem Klebstoff zur Verwendung vorgesehen ist.

10. Klebesystem nach einem der Ansprüche 8-9, weiterhin aufweisend mindestens ein Vernetzungsmittel.

11. Klebesystem nach Anspruch 9 und 10, wobei das mindestens eine Vernetzungsmittel mindestens in dem Härtemittel enthalten ist.

12. Klebesystem nach einem der Ansprüche 10-11, wobei das mindestens eine Vernetzungsmittel mindestens eines der folgenden ist: Polyamin-Epihalohydrin, Isocyanate, Glyoxal, oxazolin-funktionelle Copolymere, Polymere oder andere Verbindungen mit Acetoacetoxygruppen, Polymere umfassend primären, sekundären oder tertiären Aminogruppen oder hängenden Amidgruppen und Aluminiumsalze.

13. Verfahren zur Herstellung eines Produktes auf Holzbasis, das folgendes aufweist: Aufbringen eines Klebstoffes nach einem der Ansprüche 1-7 oder eines Klebesystems nach einem der Ansprüche 8-12 auf mindestens eine Oberfläche eines oder mehrerer Teile aus einem Holzwerkstoff und Zusammenfügen des einen Teils oder der mehreren Teile mit einem oder mehreren weiteren Teilen eines Werkstoffes.

14. Produkt auf Holzbasis, das erhältlich ist durch das Verfahren nach Anspruch 13.

15. Verwendung einer Klebstoffzusammensetzung nach einem der Ansprüche 1-7 oder eines Klebesystems nach einem der Ansprüche 8-12 zum Zusammenfügen eines oder mehrerer Teile aus einem Holzwerkstoff mit einem oder mehreren weiteren Teilen eines Werkstoffes.

**Revendications**

1. Composition adhésive aqueuse comprenant au moins un polymère synthétique et de 1 à 99% en poids sur une base de matière sèche/matière sèche de protéine de lupin, ledit au moins un polymère synthétique étant au moins l'un d'homopolymères ou de copolymères d'acétate de vinyle, d'homopolymères ou de copolymères d'esters d'acide (méth)acrylique, d'homopolymères ou de copolymères d'acide (méth)acrylique, d'homopolymères ou de copolymères de (méth)acrylamide, d'homopolymères ou de copolymères d'alcool vinylique, de polyuréthane, ou de copolymères de styrène-butadiène.

2. Composition telle que revendiquée dans la revendication 1, dans laquelle ledit au moins un polymère synthétique est au moins l'un du polyacétate de vinyle (PVAc), du polyéthylène acétate de vinyle (EVA), de copolymères de chlorure de vinyle et d'acétate de vinyle ou d'éthylène acétate de vinyle, du polyéthylène acide acrylique (PEAA), du copolymère d'éthylène méthyl acrylate (EMA), du polyméthacrylate d'éthyle (PEMA), de copolymères d'acétate de vinyle et d'autres esters, de l'alcool polyvinylique (PVA), de copolymères de styrène acrylate, et du caoutchouc de styrène-butadiène (SBR).

3. Composition telle que revendiquée dans l'une quelconque des revendications 1 et 2, dans laquelle le polymère synthétique comprend des groupes carboxyliques ou des groupes anhydrides carboxyliques.

4. Composition telle que revendiquée dans la revendication 3, dans laquelle le polymère synthétique est un copolymère issu de monomères comprenant des monomères d'ester vinylique, des monomères de (méth)acrylate et des monomères contenant des groupes anhydrides carboxyliques ou acides carboxyliques.

5. Composition telle que revendiquée dans l'une quelconque des revendications 1 à 4, dans laquelle la teneur en matière sèche est de 5 à 90% en poids.

6. Composition telle que revendiquée dans l'une quelconque des revendications 1 à 5, dans laquelle la quantité de polymère synthétique dans la composition est de 10 à 90% en poids sur une base de matière sèche/matière sèche.

7. Procédé pour la préparation d'une composition selon l'une quelconque des revendications 1 à 6, comprenant le fait de mélanger une protéine de lupin avec un polymère synthétique dans une phase aqueuse afin d'obtenir une composition aqueuse ayant une teneur en protéine de lupin allant de 1 à 99% en poids sur une base de matière sèche/matière sèche.

8. Système adhésif constitué d'une composition aqueuse selon l'une quelconque des revendications 1 à 6.

9. Système adhésif comprenant une composition aqueuse selon l'une quelconque des revendications 1 à 6 et au moins un durcisseur en tant que composant séparé destiné à être utilisé en combinaison avec la composition adhésive.

10. Système adhésif tel que revendiqué dans l'une quelconque des revendications 8 à 9, comprenant en outre au moins une substance de réticulation.

11. Système adhésif tel que revendiqué dans les revendications 9 et 10, dans lequel ladite au moins une substance de réticulation est incluse au moins dans le durcisseur.

12. Système adhésif selon l'une quelconque des revendications 10 et 11, dans lequel ladite au moins une substance de réticulation est au moins l'un(e) de la polyamine-épihalohydrine, d'isocyanates, du glyoxal, de copolymères fonctionnels d'oxazoline, de polymères ou d'autres composés comprenant des groupes acétoacétoxy, de polymères comprenant des groupes amino primaires, secondaires ou tertiaires ou des groupes amides pendants et de sels d'aluminium.

13. Procédé de production d'un produit à base de bois, comprenant le fait d'appliquer une composition adhésive selon l'une quelconque des revendications 1 à 7 ou un système adhésif selon l'une quelconque des revendications 8 à 12 sur au moins une surface d'une ou de plusieurs pièce(s) d'un matériau en bois, et de relier la ou les plusieurs pièce(s) à une ou plusieurs autre(s) pièce(s) d'un matériau.

14. Produit à base de bois pouvant être obtenu par le procédé selon la revendication 13.

**15.** Utilisation d'une composition adhésive selon l'une quelconque des revendications 1 à 7 ou d'un système adhésif selon l'une quelconque des revendications 8 à 12 pour relier une ou plusieurs pièce(s) d'un matériau en bois à une ou plusieurs autre(s) pièce(s) d'un matériau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007139501 A
- WO 2007139503 A
- WO 2010003054 A
- US 20060128840 A
- WO 2008024444 A
- WO 2011009812 A
- EP 2100922 A
- DE 377838
- US 4450045 A
- US 3311594 A
- US 4336835 A
- US 3891589 A
- US 2926154 A
- US 4857586 A
- US 4975499 A
- US 5017642 A
- US 5019606 A
- US 5093470 A
- US 5516885 A
- US 5902862 A
- WO 010000696 A

### Non-patent literature cited in the description

- **VIDAL et al.** *Evaluation of lupin flour (LF)-based adhesive for making sustainable wood materials, http://www.swst.org/meetings/AM10/ppts/Vidal.pdf*
- **VIDAL et al.** *Evaluation of lupin flour (LF)-based adhesive for making sustainable wood materials, http://www.swst.org/meetings/AM10/pdfs/IW-6%20vidal%20paper.pdf*
- **VERGARA et al.** *Use of lupin as bio-based product, http://conference.fh-salzburg.ac.at/fileadmin/files/documents/presentations/Poster_11_Vergara.pdf*